Europäisches Patentamt

European Patent Office

Office européen des brevets

(11) Veröffentlichungsnummer: **0 495 403 A1**

## (12) EUROPÄISCHE PATENTANMELDUNG

(21) Anmeldenummer: **92100325.7**

(22) Anmeldetag: **10.01.92**

(51) Int. Cl.⁵: **B01D  21/00**, B01D 24/20, B01D 24/46, B01D 36/04

(30) Priorität: **18.01.91 DE 4101332**
**16.09.91 DE 9111497 U**

(43) Veröffentlichungstag der Anmeldung:
**22.07.92 Patentblatt  92/30**

(84) Benannte Vertragsstaaten:
**AT CH DE ES FR GB IT LI NL**

(71) Anmelder: **IBO W. GRIMMEL,
ABWASSERTECHNIK GMBH & CO. KG.
Siemenstrasse 1
W-6352 Ober-Mörlen(DE)**

(72) Erfinder: **Grabowski, Gunther, Dipl.-Ing.
Weidigstrasse 33
W-6306 Langgöns(DE)**

(74) Vertreter: **Schlagwein, Udo, Dipl.-Ing.
Patentanwalt Frankfurter Strasse 34
W-6350 Bad Nauheim(DE)**

(54) **Vorrichtung zum Reinigen von Abwasser.**

(57) Bei einer Vorrichtung zum Reinigen von Abwasser ist um ein kreisförmiges Nachklärbecken (1) eine ringförmige Filterrinne (2) angeordnet, in die das Wasser von oben her über die äußere Beckenwand (7) des Nachklärbeckens (1) läuft. Das Nachklärbecken (1) hat eine Räumerbrücke (13), welche bis über die Filterrinne (2) reicht und die alle zur Reinigung der Filterschicht in der Filterrinne (2) erforderlichen Einrichtungen trägt. Insbesondere ist an ihr eine Luftleitung (22) angebracht, die zu einem unter der Filterschicht umlaufenden Luftverteilungselement 21 führt.

Fig. 1

EP 0 495 403 A1

Die Erfindung betrifft eine Vorrichtung zum Reinigen von Abwasser, welche ein kreisförmiges Nachklärbecken mit einer Räumerbrücke zur biologischen Abwasserreinigung und zur Abscheidung von Reststoffen eine dem Nachklärbecken nachgeschaltete, das Nachklärbecken kreisringförmig umgebende, offene Filterrinne mit einer horizontal ausgerichteten Filterschicht aufweist.

Eine Vorrichtung der vorstehenden Art läßt sich aus der US-A-2,339,084 herleiten. Diese Schrift beschreibt primär eine Filteranlage, der nachzuklärendes Abwasser von außen zugeführt wird. In der Schrift ist jedoch angeführt, daß ein mittiges, kreisförmiges Becken der Vorrichtung als Sedimentationstank dienen und daß das in ihm teilweise gereinigte Wasser anschließend in die das Becken ringförmig umgebende Filterrinne eingeleitet werden kann. Zur Beschickung der Filterschicht in der Filterrinne ist eine ringförmig um die Filterrinne verlaufende Einlaufkammer erforderlich. Die Aufbereitung des die Filterschicht bildenden Filtermaterials kann nur von der Filteroberseite vorgenommen werden, wozu eine ausschließlich diesem Zweck dienende Brücke aufgesetzt wird. Zur Aufbereitung werden Lanzen in die Filterschicht eingeschoben, durch die Druckwasser zur Spülung gepreßt wird. Das nach oben austretende Spülwasser wird über eine Abzugsvorrichtung abgesaugt.

Nachteilig bei dieser Art der Filterspülung ist es, daß die Lanzen mit einem bestimmten Abstand über den Filterboden geführt werden müssen und deshalb weder die Öffnungen im Filterboden noch eine dem Abstand zwischen Lanzen und Filterboden entsprechend dünne Filterschicht erreichen können. Dieser Bereich der Filterschicht wird nach gewisser Betriebsdauer seine Durchlässigkeit verlieren und die Leistung bzw. Funktionstüchtigkeit des Filters herabsetzen.

Durch die GB-A-794,006 ist es auch schon bekannt, Wasser aus einem kreisförmigen Filterbecken über ein einen Ring bildendes Wehr in eine dieses Filterbecken ringförmig umgebende Filterrinne fließen zu lassen. Die Filterrinne ist in zwei jeweils einen Halbbogen bildende Bereiche unterteilt. Zum Reinigen des Filters durch Spülen kann der Zufluß beider Bereiche unterbrochen werden. Während einer solchen Spülphase muß der in Betrieb befindliche Filterrinnenbereich mit der doppelten Wassermenge beaufschlagt werden, wodurch die Filterwirkung verschlechtert wird. Weiterhin kann diese Filterreinigung nicht kontinuierlich erfolgen.

Der Erfindung liegt das Problem zugrunde, eine Vorrichtung der eingangs genannten Art zum Reinigen von Abwasser zu entwickeln, bei dem eine möglichst wirkungsvolle Reinigung der Filterschicht des Filterbeckens einfach und kostengünstig erfolgen kann.

Dieses Problem wird erfindungsgemäß dadurch gelöst, daß der Abwasserzulauf der Filterrinne über eine diese vom Nachklärbecken trennende Beckenwand und der Wasserablauf nach unten durch die Filterschicht hindurch in einen ebenfalls kreisringförmigen Klarwasser-Sammelraum erfolgt, daß die Räumerbrücke über die Filterrinne hinwegführt und alle zur Reinigung der Filterschicht erforderlichen Einrichtungen an ihr befestigt sind, daß die Filterschicht an der die Filterrinne vom Nachklärbecken trennenden Beckenwand abgestützt und der Klarwasser-Sammelraum unterhalb der Filterschicht von Abstützungen freigehalten ist und daß von der Räumerbrücke hinter der Außenseite der Filterrinne eine starre Luftleitung in den Klarwasser-Sammelraum bis zu einem mit ihr verbundenen, unterhalb der Filterschicht angeordneten und deshalb mit der Räumerbrücke umlaufenden Luftverteilungselement führt.

Eine solche Vorrichtung stellt eine bauliche und funktionelle Einheit von Nachklärbecken und Filter dar. Der bauliche Aufwand für die Vorrichtung ist weit geringer, als wenn das Nachklärbecken und die Filterrinne als separate Vorrichtungen ausgebildet würden, da die zur Räumung des Nachklärbeckens ohnehin erforderliche Brücke zur Aufbereitung der Filterschicht durch Luft und Wasser mit verwendet werden kann. Da zwischen der Außenwand der Filterrinne und der Filterschicht ein ringförmiger Freiraum vorhanden ist und sich auch unterhalb der Filterschicht keine Abstützungen befinden, können eine Spülwasserzuführung und eine Luftleitung von der Räumerbrücke aus bis in die richtige Position in der Filterrinne geführt werden.

Die Vergrößerung des Nachklärbeckens um die Breite der Filterrinne steht in keinem Verhältnis zu den Kosten, die für ein separates Filterbauwerk aufzubringen sind.

Der Klarwasser-Sammel- und ablaufraum kann kostenmäßig vernachläßigt werden, da er praktisch die Ablaufrinne eines herkömmlichen Nachklärbeckens ersetzt.

Bei den bisher in kommunalen Kläranlagen eingesetzten Filtrationsanlagen handelt es sich um eigenständige Anlagenteile, zu denen das aus der Nachklärung ablaufende Abwasser in entsprechend große Rohrleitungen in der Regel gepumpt werden muß. In einem weiteren Leitungsstrang muß das verunreinigte Spülwasser wieder zur Kläranlage zurückgeführt werden.

Die innerhalb der konventionellen Filtrationsanlage enthaltenen Behälter oder Becken müssen mittels eines sehr komplizierten und mit einer Vielzahl von Steuerorganen ausgestatteten Leitungsnetztes ver- und entsorgt werden, um trotz intermittierenden Betriebes der Einzelfilter einen durchgehenden Filtrationsprozeß sicherzustellen.

Das erforderliche Leitungswerk bei der erfindungsgemäßen Vorrichtung ist dagegen so minimal, daß es bei einer Kostenbetrachtung vernachlässigt werden kann.

Die erfindungsgemäße Vorrichtung kommt wegen des kontinuierlichen Betriebsablaufes weitgehend ohne Steuerungstechnik aus. Selbst die Betriebsüberwachung kann sich auf eine einfache Lauf- und Störmeldung der Pumpen und Verdichter beschränken, da auch bei längerem Ausfall der Aggregate passive Sicherheitsvorkehrungen getroffen sind.

Der kontinuierliche und sich ständig selbstreinigende Filterbetrieb beschränkt die Überwachung der Anlage und ihre Funktiontüchtigkeit auf tägliche Sichtkontrollen. Gegenüber der erforderlichen Betriebsüberwachung heutiger Wasser- und Abwasserfilter durch geschultes Personal und mit hochwertiger elektronischer Datenerfassung ergibt sich für die Erfindung ein besonderer Anwendungsvorteil bei kleineren und mittleren Kläranlagen.

Nicht zuletzt sollte darauf hingewiesen werden, daß das erfindungsgemäße Filter aus zwei Gründen einen besonders hohen Filterwirkungsgrad auszeichnet:

1. Der äußere die Filterrinne bildende Kreisring mit einer Breite des Filterbettes von 1,0 bis 2,0 m stellt eine Filterfläche dar, die ungefähr 20 % der Nachklärbeckenfläche ausmacht, d.h. die Filtergeschwindigkeit ist nur ca. um das Fünffache höher als die Flächenbeschickung der Nachklärung. Bezogen auf die Bemessungsrichtwerte von Nachklärbecken beträgt damit die Filtergeschwindigkeit nur 2,0 bis 4,0 m/h und liegt damit weit unter den üblicherweise angesetzten Werten für die Filterbeaufschlagung von 5,0 bis 15,0 m/h.

2. Die Filterrückspülung wird in Abhängigkeit vom Anstieg des Filterwiderstandes vorgenommen. Hierbei kommen Spülintervalle im 12- bis 24-Stundenzyklus zustande, für die die entsprechende Betriebsdrücke bzw. Überstauhöhen vorzuhalten sind. Bei dem erfindungsgemäßen Filter werden die Spülintervalle ausschließlich durch die Umlaufzeit der Räumerbrücke bestimmt, und diese beträgt in Abhängigkeit vom Beckendurchmesser bei einer Räumgeschwindigkeit von 3 cm/s in den meisten Fällen zwischen 0,3 und 1,0 h. Daraus ergibt sich, daß sich das Filtermaterial permanent in einem idealen Zustand zur Aufnahme abfiltrierbarer Stoffe befindet.

Von den in den Unteransprüchen gekennzeichneten vorteilhaften Ausgestaltungen der Erfindung sei hervorgehoben, daß in der Filterrinne eine Abzugsvorrichtung für Schwimmschlamm angeordnet sein kann und es sich bei der Abzugsvorrichtung vorzugsweise um einen mit der Räumerbrücke umlaufenden, mit seiner Vorderkante geringfügig unter der Wasserlinie liegenden Spülkasten handelt. Durch diese Weiterbildung kann im Nachklärbecken auf eine Schwimmschlammabscheidung verzichtet werden und die ohnehin vorhandene Filterrinne zu diesem Zweck mit genutzt werden.

Die Erfindung läßt zahlreiche Ausführungsformen zu. Eine davon und eine Ausführungsvariante sind in der Zeichnung dargestellt und werden nachfolgend beschrieben. In ihr zeigen die

Fig. 1 eine teilweise Draufsicht auf eine erfindungsgemäß gestaltete Vorrichtung,

Fig. 2 einen Blick auf die Filterrinne der Vorrichtung von der Seite gesehen und ohne äußere Trennwand,

Fig. 3 einen radialen Schnitt durch den äußeren Bereich der Vorrichtung,

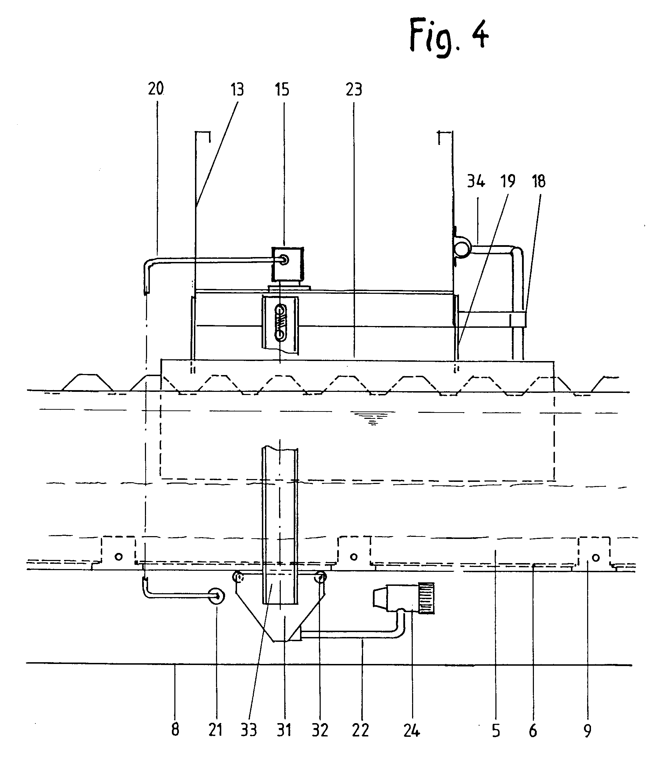

Fig. 4 eine der Figur 2 entsprechende Darstellung einer geänderten Ausführungsform der Reinigungsvorrichtung des Filterbeckens.

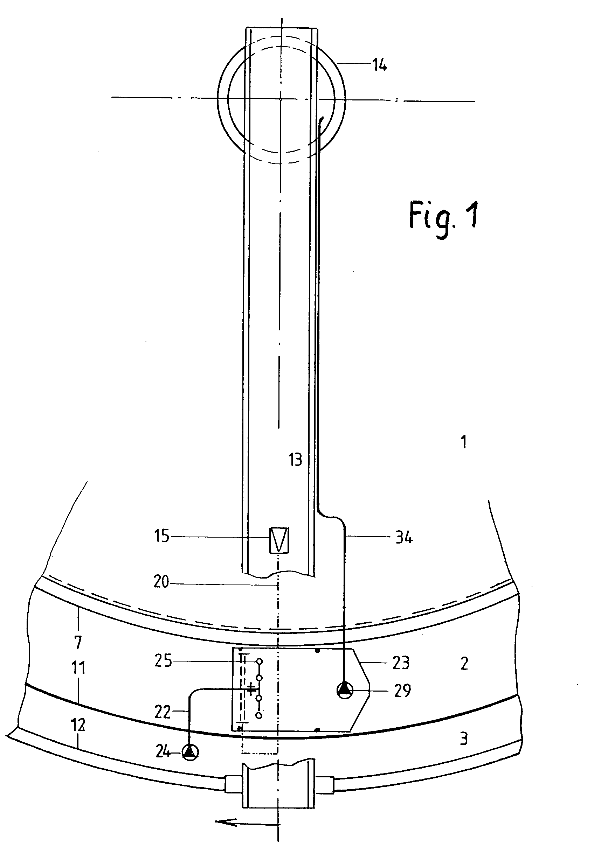

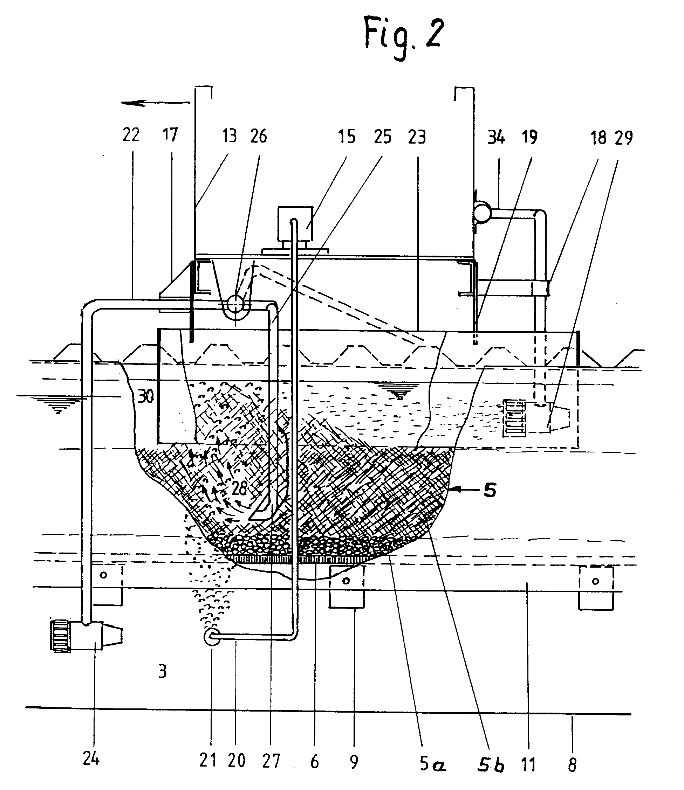

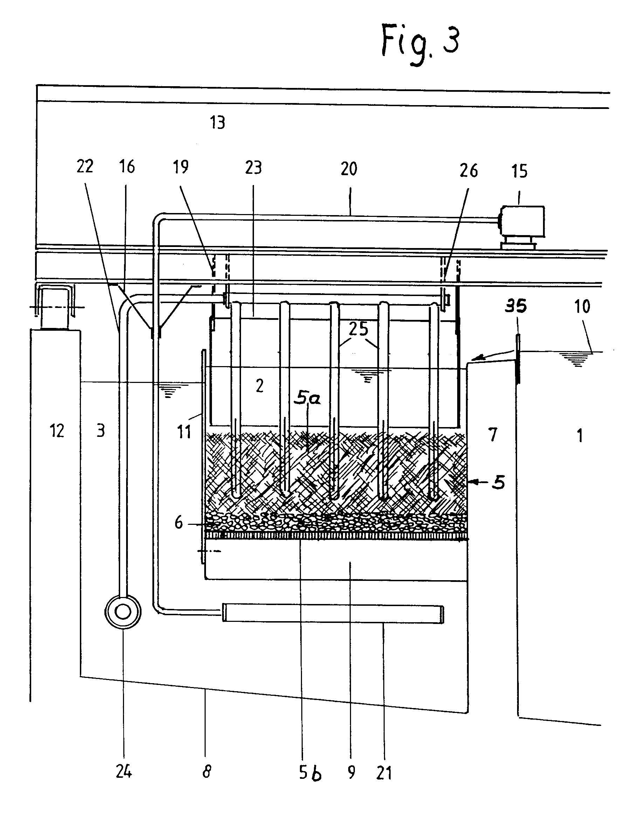

Die Figur 1 zeigt einen baulichen Zusammenschluß eines runden Nachklärbeckens 1 mit einer offenen Filterrinne 2 sowie einen die Filterrinne 2 umgebenden Klarwasser-Sammelraum 3. Filterrinne 2 und Klarwasser-Sammelraum 3 erweitern kreisringförmig das Nachklärbecken 1 und treten an die Stelle der üblicherweise an runden Becken vorhandenen Ablaufrinne. Vorteilhaft ist die Ausbildung des Filters als Dünnschichtfilter ("Kuchenfiltration"), bei der, was Figur 2 zeigt, eine Filterschicht 5 aus einer geeigneten Sandschichtung 5a bzw. einer Mehrfachschichtung und einer durch das grobkörnigere oder schwerere Filtermaterial gebildeten Tragschicht 5b besteht. Das Filtermaterial wird auf porösen Filterplatten bzw. Feinlochplatten 6 in einer Dicke von 25 bis 40 cm aufgebracht. Die Breite des Filters wird durch die aus einer in Figur 3 gezeigten senkrechten Beckenwand 7 der Nachklärung mit einem gewissen Abstand zum Beckenboden 8 in Verlängerung des Beckenbodens der Nachklärung hervortretenden Kragarme 9 bestimmt, auf denen die Feinlochplatten 6 aufgelegt sind. Eine an den Stirnflächen der Kragarme 9 angesetzte, bis auf die Höhe des Wasserspiegels 10 der Nachklärung reichende Trennwand 11 aus Stahlblech oder Stahlbeton bildet dann die äußere Begrenzung.

Gleichzeitig bildet die Trennwand 11 mit der Außenwand 12 einen weiteren Ringkanal, den Klarwasser-Sammelraum 3.

Eine Räumerbrücke 13 überspannt den Halbdurchmesser des Rundbauwerkes von einem Mittelbauwerk 14 bis zur Außenwand 12. Sie führt umlaufend die Boden- und Schwimmschlammräumung im Nachklärbecken 1 und die Spülung der Filterrinne 2 durch. Für diese Aufgabe sind auf der Räumerbrücke 13 zusätzlich ein Luftverdichter 15 sowie Haltevorrichtungen 16, 17, 18, 19 für eine unter die Filterschicht 5 führende Luftleitung 20 mit einem Luftverteilungselement 21, für eine Spülwasserzuführung 22, für eine Spülwasserableitung 34 und für einen Spülkasten 23 vorgesehen. Die Spülwasserzuführung 22 verbindet eine in den Klarwasser-Sammelraum 3 reichende, als Tauchmotorpumpe ausgebildete Spülwasserpumpe 24 mit einer Reihe von Spüllanzen 25, die sich über ein bewegliches Zwischenstück 26 in die körnige Filterschicht 5 bei außermittig gelegenem Schwerpunkt 27 schieben. Die Austrittsöffnungen der Spüllanzen 25 zeigen in Drehrichtung der Räumerbrücke 13 und sind so ausgebildet, daß das Spülwasser 28 gefächert nach schräg oben austritt, wodurch das Eindringen der Spüllanzen 25 in die Filterschicht 5 erleichtert wird. Bei Ausfall der Spülwasserpumpe 24 ist der Widerstand der Filterschicht 5 höher als das durch den außermittig gelegenen Schwerpunkt 27 bewirkte Drehmoment, und die Spüllanzen 25 schwenken nach hinten weg, wobei sie wie eine Harke durch den oberen Bereich der Filterschicht 5 gezogen werden.

In geeignetem Abstand von den Spüllanzen 25 reicht eine weitere Tauchmotorpumpe 29 in den Überstauraum 30. Die Förderleistung dieser Tauchmotorpumpe 29 ist wesentlich höher als die der Spülwasserpumpe 24, so daß nicht nur das in den Überstauraum 30 gedrückte und stark verunreinigte Spülwasser abgesaugt wird, sondern auch eine bestimmte Abwassermenge aus dem Nachklärbeckenablauf, die unter dem Spülkasten 23 hindurch der Tauchmotorpumpe 29 zuströmt. Damit werden nahezu alle aus der Filterschicht 5 herausgelösten und in den Überstauraum 30 hochgewirbelten Verunreinigungen erfaßt und über die Spülwasserableitung 34 in den Einlaufschacht des Mittelbauwerkes 14 zurückgeführt. Bei einem eventuellen Ausfall der Tauchmotorpumpe 29 würden sich die Verunreinigungen wieder auf und in der Filterschicht 5 absetzen und bei Anhalten des Störfalles den Filterwiderstand anwachsen lassen. Es ist daher vorteilhaft, die Trennwand 11 in der vorbeschriebenen Weise oben auf Höhe des Wasserspiegels 10 der Nachklärung enden zu lassen, damit bei Füllung des Überstauraumes 30 das Abwasser in den Klarwasser-Sammelraum 3 ohne Rückstau in das Nachklärbecken 1 übertreten kann. Die Funktion des Filters ist damit zwar ausgesetzt, jedoch kann, wie auch bereits bei Ausfall der Spülwasserpumpe 24 berücksichtigt, kein Schaden an der technischen Einrichtung bzw. kein störender Einfluß auf die vorgeschaltete Kläreinrichtung auftreten.

In einer weiteren Ausführung wird auf den Einsatz von Spüllanzen verzichtet und stattdessen das von der Spülwasserpumpe 24 geförderte Spülwasser in eine nach oben offene, v-förmige Spülrinne 31 gedrückt, die an der Unterseite der Feinlochplatten 6 entlanggeführt wird. Der geringe Abstand zwischen der Unterseite der Feinlochplatten 6, die mit der Unterseite der Kragarme 9 eine Linie bildet, und dem oberen Rand der Spülrinne 31 wird durch zwei Laufwalzen 32 bestimmt, die durch eine federnde Abhängung 33 der Spülrinne 31 mit leichter Anpreßkraft auf der Unterseite des Filters entlangrollen.

Die Filterrinne 2 kann zugleich für die Schwimmschlammabscheidung genutzt werden. Hierzu läßt man abweichend von der üblichen Ausbildung eines Nachklärbeckens den dort auftreibenden Schwimmschlamm über eine Überfallkante 35 (Figur 3) der Beckenwand 7 in die Filterrinne 2 gelangen. Dort strömt das Abwasser mit sehr geringer Geschwindigkeit nach unten zur Filterschicht 5, so daß sich die Schwimmstoffe wieder nach oben absetzen können und die Oberfläche der Filterrinne 2 bedecken. Für die Entfernung des Schwimmschlammes aus der Filterrinne 2 ist der Spülkasten 23 als ein die gesamte Breite der Filterrinne 2 ausfüllender Abzugskasten ausgebildet. Seine Vorderkante liegt geringfügig unter dem Wasserspiegel 10. Im Spülkasten 23 ist die Tauchmotorpumpe 29 installiert, die bei Betrieb ständig Wasser und Schwimmschlamm von der Oberfläche der Filterrinne 2 abzieht. Während der Schwimmschlammräumung muß der Luftverdichter 15 abgeschaltet sein, da sonst der Blasenaufstieg den Schwimmschlamm vom als Abzugskasten ausgebildeten Spülkasten 23 fernhalten würde.

**Patentansprüche**

1. Vorrichtung zum Reinigen von Abwasser, welche ein kreisförmiges Nachklärbecken (1) mit einer Räumerbrücke (13) zur biologischen Abwasserreinigung und zur Abscheidung von Reststoffen eine dem Nachklärbecken (1) nachgeschaltete, das Nachklärbecken (1) kreisringförmig umgebende, offene Filterrinne (2) mit einer horizontal ausgerichteten Filterschicht (5) aufweist, dadurch gekennzeichnet, daß der Abwasserzulauf der Filterrinne (2) über eine diese vom Nachklärbecken (1) trennende Beckenwand (7) und der Wasserablauf nach unten durch die Filterschicht (5) hindurch in einen ebenfalls kreisringförmigen Klarwasser-Sammelraum (3) erfolgt, daß die Räumerbrücke (13) über die Filterrinne (2) hinwegführt und alle zur Reinigung der Filterschicht (5) erforderlichen Einrichtungen an ihr befestigt sind, daß die Filterschicht (5) an der die Filterrinne (2) vom Nachklärbecken (1) trennenden Beckenwand (7) abgestützt und der Klarwasser-Sammelraum (3) unterhalb der Filterschicht (5) von Abstützungen freigehalten ist und daß von der Räumerbrücke (13) hinter der Außenseite der Filterrinne (2) eine starre Luftleitung (20) in den Klarwasser-Sammelraum (3) bis zu einem mit ihr verbundenen, unterhalb der Filterschicht (5) angeordneten und deshalb mit der Räumerbrücke (13) umlaufenden Luftverteilungselement (21) führt.

2. Vorrichtung nach Anspruch 1, dadurch gekennzeichnet, daß die Filterschicht (5) auf Feinlochplatten (6) aufliegt, die ihrerseits auf radial aus der die Filterrinne (2) vom Nachklärbecken (1) trennenden Beckenwand (7) ragen.

3. Vorrichtung nach den Ansprüchen 1 oder 2, dadurch gekennzeichnet, daß zur Förderung des erforderlichen Spülwassers im Klarwasser-Sammelraum (3) eine Tauchmotorpumpe (24) angeordnet ist, welche mit einer Reihe von Spüllanzen (25) Verbindung hat, die durch ihr Eigengewicht in die durch Spülwasser und Luft aufgelockerte Filterschicht (5) eindringen.

4. Vorrichtung nach zumindest einem der vorangehenden Ansprüche, dadurch gekennzeichnet, daß zur Erzeugung der Druckluft auf der Räumerbrücke (13) ein Luftverdichter (15) angeordnet ist.

5. Vorrichtung nach zumindest einem der vorangehenden Ansprüche, dadurch gekennzeichnet, daß im Überstauraum der Filterrinne (2) zur Rückförderung von hinter der Reihe von Spüllanzen (25) abgesaugtem Spülwasser zu einem Einlaufschacht des Nachklärbeckens (1) eine weitere Tauchmotorpumpe (29) angeordnet ist, welche eine wesentlich größere Förderleistung hat als die Tauchmotorpumpe (24) im Klarwasser-Sammelraum (3).

6. Vorrichtung nach zumindest einem der vorangehenden Ansprüche, dadurch gekennzeichnet, daß unter der Räumerbrücke (13) ein oben und unten offener Spülkasten (23) in den Überstauraum reichend eingehängt ist, dessen Seitenwände über die Wasserspiegellinie bzw. bis dicht über die Filterschicht (5) reichen und der seitlich nur einen schmalen Spalt zwischen der Beckenwand (7) des Nachklärbeckens (1) und sich in seiner Längsrichtung über das Luftverteilungselement (21) sowie die zur Absaugung des stark verunreinigten Spülwassers eingetauchte Tauchmotorpumpe (29) erstreckt.

7. Vorrichtung nach zumindest einem der vorangehenden Ansprüche, dadurch gekennzeichnet, daß eine nach oben offene, v-förmige Spülrinne (31) federnd von der Räumerbrücke (13) abgehängt unter die Filterschicht (5) reicht, in die Spülwasser aus dem Klarwasser-Sammelraum (3) von der Tauchmotorpumpe (24) gefördert wird und die mit zwei Laufwalzen (32) ausgestattet ist, so daß sie durch die Bewegung der Räumerbrücke (13) mit geringem Abstand entlang der Unterseite der Filterschicht (5) fährt.

8. Vorrichtung nach zumindest einem der vorangehenden Anspüche, dadurch gekennzeichnet, daß in der Filterrinne (2) eine Abzugsvorrichtung (Spülkasten 23) für Schwimmschlamm angeordnet ist.

9. Vorrichtung nach Anspruch 8, dadurch gekennzeichnet, daß die Abzugsvorrichtung ein mit der Räumerbrücke (13) umlaufender, mit seiner Vorderkante geringfügig unter der Wasserlinie liegender Spülkasten (23) ist.

Fig. 1

# Fig. 2

# Fig. 3

# Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 086 829 (STREANDER P.B.)<br><br>* Seite 1, linke Spalte, Zeile 45 - rechte Spalte, Zeile 19 *<br>* Seite 2, rechte Spalte, Zeile 1 - Seite 3, linke Spalte, Zeile 24; Abbildungen 1,2,11,12,14 *<br><br>--- | 1,2,5,6, 8,9 | B01D21/00<br>B01D24/20<br>B01D24/46<br>B01D36/04 |
| Y | GB-A-597 491 (PISTA S.A.)<br><br>* Seite 1, rechte Spalte, Zeile 93 - Seite 2, linke Spalte, Zeile 18; Anspruch 1; Abbildungen *<br><br>--- | 1,2,5,6, 8,9 | |
| A | FR-A-1 524 245 (RENSONNET)<br>* Seite 1, rechte Spalte, Absatz 3 *<br>* Ansprüche; Abbildungen 1,5,6 *<br>--- | 3 | |
| A | US-A-1 975 109 (LAUGHLIN W.C.)<br>* Seite 2, linke Spalte, Zeile 43 - Seite 3, linke Spalte, Zeile 45; Abbildungen 1,2,4 *<br>--- | 1-9 | RECHERCHIERTE SACHGEBIETE (Int. Cl.5) |
| A | DE-A-1 811 507 (UNION TANK CAR CO.)<br>* Ansprüche; Abbildungen *<br><br>----- | 1-3 | B01D |

Der vorliegende Recherchenbericht wurde für alle Patentansprüche erstellt

| Recherchenort | Abschlußdatum der Recherche | Prüfer |
|---|---|---|
| DEN HAAG | 14 MAI 1992 | PLAKA T. |